# EUROPÄISCHE PATENTSCHRIFT

(11) **EP 2 549 164 B1**
(45) Veröffentlichungstag und Bekanntmachung des Hinweises auf die Patenterteilung: **01.03.2017**
(21) Anmeldenummer: 12168642.2
(22) Anmeldetag: 21.05.2012
(51) Int. Cl.: F16L 33/26, F16L 25/00, F16L 23/024, F16L 13/08

(54) **Fluidleitungselement und Verfahren zu dessen Herstellung**
Fluid line element and method for its production
Élément de conduite de fluide et son procédé de fabrication

(30) Priorität: 18.07.2011 DE 102011107886
(43) Veröffentlichungstag der Anmeldung: 23.01.2013
(60) Teilanmeldung: 16182677.1
(73) Patentinhaber: Witzenmann GmbH, 75175 Pforzheim (DE)
(72) Erfinder: Bessler, Frank, 75446 Wiernsheim (DE); Barruca, Lorenzo, 71272 Renningen (DE); Mauch, Stefan, 75217 Birkenfeld (DE)
(74) Vertreter: Lemcke, Brommer & Partner Patentanwälte Partnerschaft mbB

(56) Entgegenhaltungen:
- EP-A1- 2 050 995
- DE-T2- 60 019 377
- DE-U1- 20 000 888
- DE-U1- 29 818 534
- US-A- 2 722 437
- US-A- 6 102 445

## Beschreibung

Die Erfindung betrifft ein Fluidleitungselement mit einem metallischen Ringwellschlauch und einem Verbindungsteil zum Verbinden mit weiteren Elementen einer Fluidleitung, an welchem Ringwellschlauch ein erstes und ein zweites Anschlussende ausgebildet ist, an welchen Anschlussenden jeweils ein Verbindungsteil zum Verbinden mit weiteren Elementen einer Fluidleitung angeordnet ist.

Weiterhin betrifft die Erfindung ein Verfahren zum Herstellen eines derartigen Fluidleitungselements.

Die EP 2 050 995 A1 zeigt den Oberbegriff der Ansprüche 1 und 11. Weitere Fluidleitungen ähnlicher Art sind aus DE 600 19 377 T2, DE 298 18 534 U1, US 6 102 445 A und US 2 722 437 A bekannt.

Fluidleitungselemente der oben genannten Art werden insbesondere im Kraftfahrzeugbereich in Ölrückführleitungen verwendet.

Standardlösungen, wie die Hydra-Ölleitung aus dem Hause der Anmelderin, können derart ausgebildet sein, dass an dem einen Anschlussende des Ringwellschlauchs ein Flanschverbindungsteil und an dem anderen Anschlussende eine Überwurfmutter angeordnet ist, um das resultierende Fluidleitungselement in der gewünschten Weise mit weiteren Elementen einer Fluidleitung verbinden zu können. Das Fügen des Flanschverbindungsteils geschieht dabei nach dem Stand der Technik unter Verwendung einer Bördeltechnik, wobei das Flanschteil eine Hinterschneidung aufweist, in welche die letzte Welle des Ringwellschlauchs eingedrückt wird, nachdem der Ringwellschlauch vorher gereckt wurde, um ihn durch einen Durchbruch in dem Flanschverbindungsteil führen zu können. Ein derartiges Verfahren ist aufwändig und entsprechend kostenintensiv.

Andererseits besteht beim Montieren einer Überwurfmutter die Gefahr einer Fehlmontage, was zur Folge hat, dass das Fluidleitungselement bzw. die Fluidleitung im Einsatz nicht dicht ist. Außerdem wird der Ringwellschlauch bei der Montage einer potentiell schädlichen Torsionsbelastung ausgesetzt, wenn die Überwurfmutter aufgeschraubt wird. Auch dies führt zu einem potentiell arbeitsaufwändigen und entsprechend kostenträchtigen Herstellverfahren.

Der Erfindung liegt die Aufgabe zugrunde, ein Fluidleitungselement und ein Verfahren zu dessen Herstellung anzugeben, welches sich gegenüber dem Stand der Technik durch günstigere Herstellungskosten bei vereinfachter Herstellung auszeichnet. Außerdem soll eine Torsionsbelastung des Ringwellschlauchs vermieden werden, um dessen Lebensdauer zu erhöhen. Gleichzeitig soll sich das erfindungsgemäße Fluidleitungselement durch eine sichere Funktion und eine hohe Dichtigkeit auszeichnen.

Die Aufgabe wird erfindungsgemäß gelöst durch ein Fluidleitungselement mit den Merkmalen des Patentanspruchs 1 sowie durch ein Verfahren zum Herstellen eines solchen Fluidleitungselements mit den Merkmalen des Patentanspruchs 11.

Vorteilhafte Weiterbildungen der Erfindung sind jeweils Gegenstand von Unteransprüchen, deren Wortlaut hiermit durch ausdrückliche Bezugnahme in die Beschreibung aufgenommen wird, um unnötige Textwiederholungen nach Möglichkeit zu vermeiden.

Erfindungsgemäß ist ein Fluidleitungselement derart ausgebildet, dass es einen metallischen Ringwellschlauch und ein Verbindungsteil zum Verbinden mit weiteren Elementen einer Fluidleitung umfasst, an welchem Ringwellschlauch ein erstes und ein zweites Anschlussende ausgebildet ist, an welchen Anschlussenden jeweils ein Verbindungsteil zum Verbinden mit weiteren Elementen einer Fluidleitung angeordnet ist. Dabei ist erfindungsgemäß weiterhin vorgesehen, dass wenigstens eines der Verbindungsteile als Anschlussteil, vorzugsweise Anschlussdrehteil, ausgebildet ist, welches Anschlussteil mit einem Einführende in den Ringwellschlauch an dem betreffenden Anschlussende eingeführt ist, wobei das Anschlussteil an dem Einführende eine zu seinem freien Ende hin konusförmig abgeschrägte Verjüngung aufweist, wobei in eine Innenwelle des Ringwellschlauchs im Einführbereich des Anschlussteils ein Lotmittel, vorzugsweise Lotpaste oder Lotring, eingebracht ist, und wobei der Ringwellschlauch und das Anschlussteil mittels einer Lötverbindung stoffschlüssig verbunden sind, vorzugsweise umfänglich durchgehend.

Erfindungsgemäß ist also vorgesehen, dass das Lotmittel in einem Bereich des Ringwellschlauchs aufgebracht ist bzw. wird, in welchem Bereich der Ringwellschlauch anschließend mit dem jeweiligen Verbindungsteil (Anschlussteil/Anschlussdrehteil) wechselwirkt.

Vorteilhafterweise kann das andere der beiden Verbindungsteile als Flanschverbindungsteil ausgebildet sein, welches Flanschverbindungsteil den Ringwellschlauch an dem betreffenden Anschlussende umfänglich umgibt und welches durch Stauchen des Ringwellschlauchs im Bereich des betreffenden Anschlussendes auf dem Ringwellschlauch gehalten ist, wobei in eine Außenwelle des Ringwellschlauchs in dem von dem Flanschverbindungsteil umgebenen Bereich ein Lotmittel, nur vorzugsweise Lotpaste oder Lotring, eingebracht ist, und der Ringwellschlauch und das Flanschverbindungsteil mittels einer Lötverbindung stoffschlüssig verbunden sind, vorzugsweise umfänglich durchgehend.

Dabei ist angestrebt, dass das Lotmittel im Bereich des betreffenden Anschlussendes derart in eine Außenwelle des Ringwellschlauchs eingebracht ist bzw. wird, dass beim anschließenden Stauchen des Ringwellschlauches das Lotmittel zwischen Ringwellschlauch und Flanschverbindungsteil nach außen hervortritt und somit von außen sichtbar ist, was einerseits die Verbindungssicherheit erhöht und zudem eine visuelle Inspektion der Verbindungsqualität ermöglicht.

Auf der entsprechenden Anschlussseite des Fluidleitungselements kann vorgesehen sein, dass das Lotmittel derart in eine Innenwelle des Ringwellschlauchs eingebracht ist bzw. wird, dass das Lotmittel beim anschließenden Einführen des Anschlussteils (Anschlussdrehteils) mit seinem konisch zulaufenden Einführende in den Ringwellschlauch aus der genannten Innenwelle zumindest teilweise nach innen herausgedrückt wird, um eine Kehle zwischen dem Einführende des Anschlussteils (Anschlussdrehteils) und dem Ringwellschlauch zu füllen, was ebenfalls die Verbindungsqualität und Verbindungssicherheit erhöht.

Wie der Fachmann jedoch erkennt, ist es im Rahmen der vorliegenden Erfindung nicht erforderlich, an den beiden Anschlussenden des Ringwellschlauchs unterschiedliche Verbindungsteile vorzusehen. So liegt es im Rahmen der vorliegenden Erfindung, an beiden Anschlussenden des Ringwellschlauchs ein Anschlussteil (Anschlussdrehteil) vorzusehen. Dadurch lässt sich das erfindungsgemäße Fluidleitungselement in vielfältiger Weise einsetzen, insbesondere zur Schaffung kostengünstiger Ölrückführleitungen im Kfz-Bereich oder auch für Entgasungsleitungen bei Kraftfahrzeugen mit Hybridantrieb.

Im Zuge einer anderen Weiterbildung kann das Flanschverbindungsteil als massives Stanzteil ausgebildet sein. Alternativ ist jedoch auch eine Ausbildung des Flanschverbindungsteils als einfaches Blechteil möglich, was eine flexible Formgebung des Flanschverbindungsteils ermöglicht. Selbstverständlich können an beiden Anschlussenden des Ringwellschlauchs unterschiedliche Flanschverbindungsteile zum Einsatz kommen.

Im Zuge einer äußerst bevorzugten Weiterbildung des erfindungsgemäßen Fluidleitungselements ist vorgesehen, dass wenigstens eines der Verbindungsteile nach Art einer Kombination aus Flanschverbindungsteil und Anschlussteil ausgebildet ist bzw. dass das Anschlussteil (Anschlussdrehteil) an seinem den Einführende entgegengesetzten Ende zusätzlich auch als Flanschverbindungsteil ausgebildet ist, vorzugsweise als Blechflanschteil. Im Zuge einer alternativen Betrachtungsweise ist dies gleichbedeutend damit, dass an einem Anschlussende des Ringwellschlauchs ein Flanschverbindungsteil zum Einsatz kommt, welches mit einem konusförmig zulaufenden Einführende nach Art des weiter oben beschriebenen Anschlussteils (Anschlussdrehteil) ausgebildet ist, so dass das Fügen eines derartigen Flanschverbindungsteils mit dem Ringwellschlauch nicht nach dem angegebenen Stauchverfahren, sondern nach dem weiter oben beschriebenen Kegelprozess erfolgt.

Im Zuge einer wieder anderen Weiterbildung des erfindungsgemäßen Fluidleitungselements kann vorgesehen sein, dass das Anschlussteil (speziell in seiner Ausgestaltung als Anschlussdrehteil) eine Außenkontur aufweist, die zum Verbinden mit einem weiteren Element der Fluidleitung ausgebildet ist, insbesondere durch Vorsehen entsprechender Verbindungsstrukturen, wie umlaufende Vertiefungen (Nuten) oder Erhöhungen (Vorsprünge).

Ein erfindungsgemäßes Verfahren zum Herstellen eines Fluidleitungselements, umfassend einen metallischen Ringwellschlauch, an welchem Ringwellschlauch ein erstes und ein zweites Anschlussende ausgebildet ist, an welchen Anschlussenden jeweils ein Verbindungsteil zum Verbinden mit weiteren Elementen einer Fluidleitung angeordnet ist, beinhaltet außer einem Ablängen des Ringwellschlauchs auf eine gewünschte Länge noch die folgenden weiteren Verfahrensschritte:
Einführen eines sich an seinem einen Ende konisch verjüngenden Anschlussteils in den Ringwellschlauch, bis das Anschlussteil mit seinem Außendurchmesser im Bereich des Einführendes innen an dem Ringwellschlauch kraftschlüssig in Anlage tritt, wobei zuvor in eine Innenwelle des Ringwellschlauchs im Einführbereich des Anschlussteils ein Lotmittel eingebracht wird, vorzugsweise Lotpaste oder Lotring, und durch induktive und/oder thermische Einwirkung eine Lötverbindung zwischen Ringwellschlauch und dem Anschlussteil geschaffen wird.

Bei der vorstehend beschriebenen einfachsten Variante des erfindungsgemäßen Herstellverfahrens ergibt sich jeweils eine kraftschlüssige Verbindung zwischen Anschlussteil (Anschlussdrehteil) und Ringwellschlauch.

Zusätzlich können bei einem erfindungsgemäßen Verfahren zum Herstellen des Fluidleitungselements folgende Schritte vorgesehen sein:
Durchführen eines Endes des Ringwellschlauchs durch ein als Flanschverbindungsteil ausgebildetes Verbindungsteil, so dass dieses Flanschverbindungsteil den Ringwellschlauch umfänglich umgibt, und anschließendes Stauchen des Ringwellschlauchs im Bereich des betreffenden Endes, um den Ringwellschlauch und das Flanschverbindungsteil gegeneinander zu verstemmen, wobei zuvor in einer Außenwelle des Ringwellschlauchs in dem von dem Flanschverbindungsteil zu umgebenden Bereich ein Lotmittel, vorzugsweise Lotpaste oder Lotring, eingebracht wird, und durch induktive und/oder thermische Einwirkung eine Lötverbindung zwischen Ringwellschlauch und Flanschverbindungsteil geschaffen wird.

Das Schaffen der entsprechenden Lötverbindung kann demnach entweder induktiv oder von außen mit Flamme erfolgen, vorzugsweise in einem Durchlaufofen, dessen Einwirkung auf das erfindungsgemäße Fluidleitungselement sich anschließend insbesondere auch in einer erleichterten Biegbarkeit des Ringwellschlauchs selbst äußert.

Das Fügen von Flanschverbindungsteil und Ringwellschlauch kann durch Stauchen eines Überstandes des Ringwellschlauchs und entsprechendes Einpressen in einen Durchbruch des Flanschverbindungsteils erfolgen, so dass Ringwellschlauch und Flanschverbindungsteil gegeneinander verstemmt und kraftschlüssig miteinander verbunden sind. Die Verwendung der aufwändigen Bördeltechnik mit entsprechender Bordvorbereitung ist entsprechend nicht mehr erforderlich, was den Herstellungsaufwand und entsprechend die Kosten deutlich verringert.

Es kann vorgesehen sein, dass das Fügen des Anschlussteils, insbesondere Anschlussdrehteil, durch Einführen eines konusförmig zulaufenden Einführendes in den Ringwellschlauch erfolgt, wobei ein Kegelwinkel des Konus vorzugsweise etwa 3° beträgt. Ein solches Fügeverfahren erfordert - anders als z. B. das Orbitalschweißen - keine aufwändige Bordvorbereitung im Bereich des entsprechenden Anschlussendes des Ringwellschlauchs, welcher einfach abgeschnitten und beim Einführen des Konus eingesteckt bzw. nach innen mit eingezogen wird. Das vorstehend beschriebene Fügeverfahren wird nachfolgend auch als "Kegelprozess" bezeichnet.

Wie bereits erwähnt, beträgt der Konuswinkel der Abschrägung im Einführbereich des Anschlussteils (Anschlussdrehteils) vorzugsweise etwa 3°. Es ist jedoch grundsätzlich möglich, dass der Kegel- oder Konuswinkel im Bereich zwischen 1 und 10°, vorzugsweise zwischen 2 und 5° liegt.

Die vorstehend beschriebenen Fügearten an den Anschlussenden des Ringwellschlauchs sind über weite Durchmesserbereiche anwendbar, so dass im Rahmen der Erfindung der Ringwellschlauch seinen inhärenten Vorteil gegenüber Metallbälgen, nämlich die Verfügbarkeit über größere Durchmesser und Längenbereiche bei gleichzeitigem Kostenvorteil, voll ausspielen kann.

Wie weiter oben bereits ausgeführt, sieht eine bevorzugte Weiterbildung des erfindungsgemäßen Verfahrens vor, dass das Stauchen des Ringwellschlauchs und/oder das Aufbringen des Lotmittels derart erfolgt, dass beim Stauchen des Ringwellschlauchs das Lotmittel zwischen Flanschverbindungsteil und Ringwellschlauch nach außen hervortritt, um die Verbindungssicherheit zu erhöhen und eine visuelle Inspektion der Verbindungsqualität zu ermöglichen. Im Zuge einer wieder anderen Weiterbildung des erfindungsgemäßen Verfahrens, auf die weiter oben ebenfalls bereits hingewiesen wurde, kann vorgesehen sein, dass der Ringwellschlauch derart abgelängt (abgeschnitten) und/oder dass das Anschlussteil (Anschlussdrehteil) derart in den Ringwellschlauch eingeführt wird, dass der Bord des Ringwellschlauchs nach innen mit in den Ringwellschlauch eingezogen wird. Auf diese Weise ist es erfindungsgemäß nicht länger erforderlich, beim Ablängen bzw. Abschneiden des Ringwellschlauchs an dem betreffenden Anschlussende ein besonderes Maß an Sorgfalt walten zu lassen, was sich günstig auf die Kosten des gesamten Herstellungsprozesses auswirkt.

Entsprechend ist - wie bereits ausgeführt - vorgesehen, dass das an dem entsprechenden Anschlussende innen auf den Ringwellschlauch aufgebrachte Lotmittel beim Fügen des Anschlussteils (Anschlussdrehteils) nach innen ausquillt und die Kehle zwischen Anschlussteil (Anschlussdrehteil) und Ringwellschlauch ausfüllt.

Als besonders günstig hat sich herausgestellt, wenn sich die Einführschräge des Anschlussteils bis etwa zur Mitte der zweiten endständigen Welle des Ringwellschlauchs an dem entsprechenden Anschlussende erstreckt. Andererseits hat es sich als besonders günstig erwiesen, an dem anderen Anschlussende etwa die letzten fünf endständigen Wellen des Ringwellschlauchs zum Verstemmen in dem Flanschverbindungsteil zu stauchen. In beiden Fällen wird beim Fügen des jeweiligen Verbindungsteils der Ringwellschlauch von außen ergriffen und mittels eines entsprechenden Vorsprungs in einer Welle gehalten.

Nach den Erfahrungen der Anmelderin hat sich gezeigt, dass sich durch den Einsatz der vorliegenden Erfindung die Herstellkosten für entsprechende Fluidleitungselemente um etwa 30 bis 40 % gegenüber dem Stand der Technik senken lassen.

Weitere Eigenschaften und Vorteile der vorliegenden Erfindung ergeben sich aus der nachfolgenden Beschreibung von Ausführungsbeispielen anhand der Zeichnung.
- Figur 1: zeigt eine schematische Gesamtansicht eines erfindungstgemäßen Fluidleitungselements;
- Figur 2: zeigt teilweise und im Längsschnitt eine erste Ausgestaltung des Flanschverbindungsteils und den Ringwellschlauch vor dem Verbinden;
- Figur 3: zeigt die Ausgestaltung gemäß Figur 2 nach erfolgtem Verbinden durch Stauchen des Ringwellschlauchs;
- Figur 4: zeigt eine alternative Ausgestaltung des Flanschverbindungsteils nach erfolgtem Stauchen des Ringwellschlauchs;
- Figur 5: zeigt eine erfindungsgemäße Verbindung des Ringwellschlauchs mit einem Anschlussdrehteil mit konusförmig ausgebildetem Einführende;
- Figur 6: zeigt eine weitere erfindungsgemäße Verbindung des Ringwellschlauchs mit einem Anschlussdrehteil mit konusförmig ausgebildetem Einführende;
- Figur 7: zeigt eine wieder andere Ausgestaltung des Flanschverbindungsteils nach Art eines Anschlussteils mit konusförmig abgeschrägtem Einführende;
- Figur 8: zeigt das Aufbringen eines Lotmittels auf den Ringwellschlauch vor dem Verbinden mit einem Flanschverbindungsteil; und
- Figur 9: zeigt das Aufbringen eines Lotmittels auf den Ringwellschlauch vor dem Einführen eines Anschlussteils.

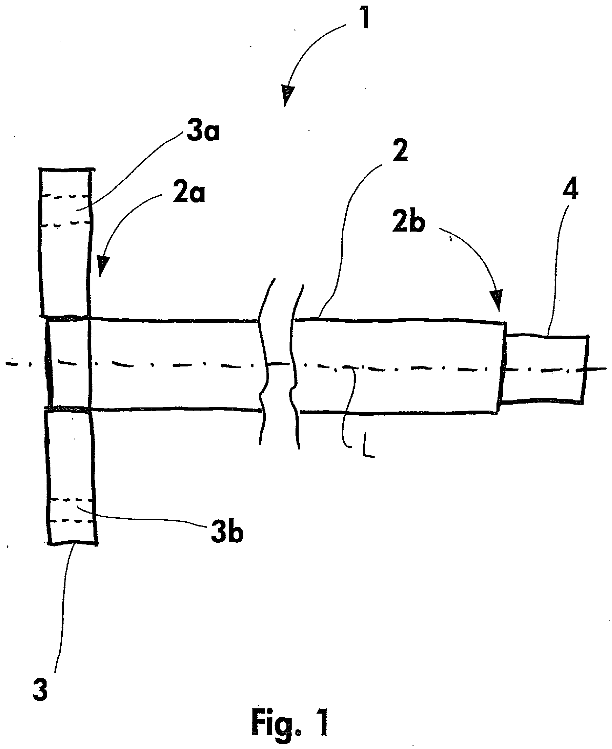

Figur 1 zeigt eine mögliche Ausgestaltung des erfindungsgemäßen Fluidleitungselements, welches in seiner Gesamtheit mit dem Bezugszeichen 1 bezeichnet ist. Das Fluidleitungselement 1 umfasst einen metallischen Ringwellschlauch 2, an welchem Ringwellschlauch 2 ein erstes Anschlussende 2a und ein zweites Anschlussende 2b ausgebildet ist. An beiden Anschlussenden 2a, 2b ist jeweils ein Verbindungsteil 3 bzw. 4 vorgesehen, welches zum Verbinden mit weiteren Elementen einer Fluidleitung (nicht gezeigt) ausgebildet und vorgesehen ist. Das erste Verbindungsteil 3, welches am ersten Anschlussende 2a angeordnet ist, ist als Flanschverbindungsteil ausgebildet, welches den Ringwellschlauch 2 an dem betreffenden Anschlussende 2a umfänglich umgibt. Nach dem Ausführungsbeispiel gemäß Figur 1 ist das Flanschverbindungsteil 3 als massives Stanzteil ausgebildet und weist Bohrungen 3a, 3b auf, die dazu dienen können, das Flanschverbindungsteil 3 bzw. das gesamte Fluidleitungselement 1 mit einem (nicht gezeigten) weiteren Element einer Fluidleitung zu verbinden, wie bereits ausgeführt. Das Flanschverbindungsteil 3 ist durch Stauchen des Ringwellschlauchs 2 im Bereich des Anschlussendes 2a kraftschlüssig auf dem Ringwellschlauch gehalten, worauf weiter unten noch genauer eingegangen wird. Zusätzlich kann in diesem Bereich eine Lötverbindung vorgesehen sein, worauf ebenfalls weiter unten noch genauer eingegangen wird.

Das andere Verbindungsteil 4 ist gemäß der Ausgestaltung in Figur 1 als Anschlussteil, speziell als Anschlussdrehteil ausgebildet. Das Anschlussdrehteil 4 weist ein in der Darstellung gemäß Figur 1 nicht zu erkennendes Einführende auf, mit welchem das Anschlussdrehteil 4 an dem betreffenden Anschlussende 2b in den Ringwellschlauch 2 eingeführt ist. Auf die genaue Ausgestaltung des Anschlussdrehteils 4, insbesondere an seinem Einführende, wird weiter unten ebenfalls noch genauer eingegangen.

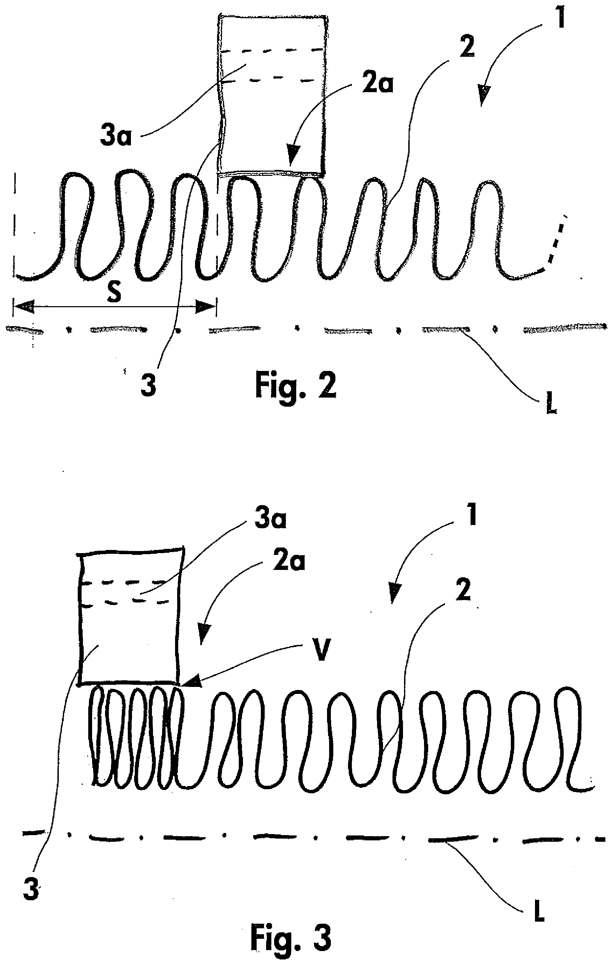

Figur 2 zeigt teilweise und im Längsschnitt die Verbindung zwischen dem Flanschverbindungsteil 3 mit dem Ringwellschlauch 2 gemäß Figur 1. Bezugszeichen L in Figur 2 bezeichnet die Längsachse der Anordnung, bezüglich welcher Längsachse L das Fluidleitungselement 1 im Wesentlichen symmetrisch ausgebildet ist.

In dem Verbindungszustand gemäß Figur 2 ist das Flanschverbindungsteil 3 im Bereich des Anschlussendes 2a auf einen entsprechend abgelängten Ringwellschlauch 2 aufgeschoben, so dass es diesen umfänglich mit geringem radialen Spiel umgibt. Dabei weist der Ringwellschlauch 2 auf der einen Seite des Flanschverbindungsteüs 3 (links in Figur 2) einen bestimmten Überstand S auf, auf dessen Bedeutung nun anhand von Figur 3 näher eingegangen wird.

Figur 3 zeigt das Fluidleitungselement 1 gemäß Figur 2 nach erfolgter Stauchung des Ringweüschlauchs 2 im Bereich des Anschlussendes 2a, so dass der Überstand S in dem Bereich innerhalb des Flanschverbindungsteils 3 zusammengeschoben ist, was zu einer Verdickung des Ringwellschlauchs 2 in radialer Richtung führt, so dass Ringwellschlauch 2 und Flanschverbindungsteil 3 im Bereich des Anschlussendes 2a miteinander verstemmt sind. Das Flanschverbindungsteil 3 ist auf diese Weise kraftschlüssig auf dem Ringwellschlauch 2 gehalten.

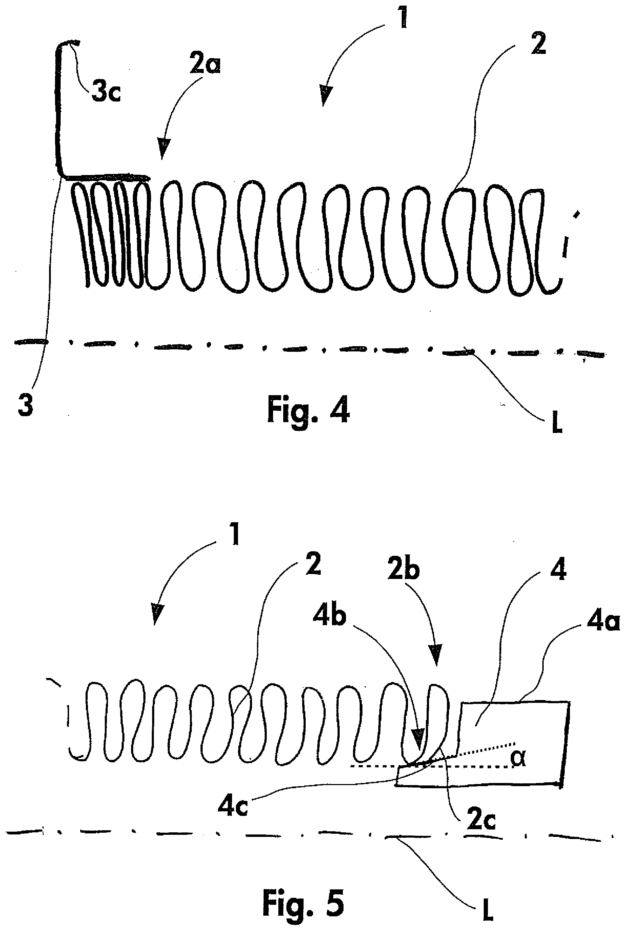

Figur 4 zeigt eine weitere Ausgestaltung des erfindungsgemäßen Fluidleitungselements 1 in einem Verbindungszustand analog Figur 3. Hierbei ist das Flanschverbindungsteil 3 nicht als massives Stanzteil sondern als Blechteil ausgebildet, welches im Schnitt die gezeigte in etwa L-förmige Gestalt mit radial außenliegender, endständiger Umbiegung 3c aufweist. Die Befestigung am Ringwellschlauch 2 erfolgt in bereits beschriebener Art und Weise dadurch, dass der Ringwellschlauch 2 im Bereich des Anschlussendes 2a gestaucht wird, so dass es zu einer Verstemmung von Ringwellschlauch 2 und Flanschverbindungsteil 3 kommt.

Figur 5 zeigt das andere Anschlussende 2b eines erfindungsgemäßen Fluidleitungselements 1, insbesondere das rechte Ende des Fluidleitungselements 1 gemäß Figur 1. An seinem Anschlussende 2b ist der Ringwellschlauch 2 mit einem speziell als Anschlussdrehteil ausgebildeten Anschlussteil 4 kraftschlüssig verbunden, worauf nun genauer eingegangen wird:
Gemäß der Ausgestaltung in Figur 5 weist das Anschlussdrehteil 4 eine glatte Außenkontur 4a auf und ist somit insgesamt etwa zylindrisch ausgebildet. Mit einem Einführende 4b ist das Anschlussteil 4 in den Ringwellschlauch 2 eingeführt, wodurch der Bord 2c des Ringwellschlauchs 2 mit nach innen eingezogen ist. Das Anschlussteil 4 weist zu diesem Zweck an dem genannten Einführende 4b eine sich zum freien Einführende hin konisch verjüngende Formgebung mit einer entsprechenden Abschrägung 4c auf, wobei der Konuswinkel a der Abschrägung 4c beispielsweise etwa 3° beträgt.

An seinem anderen Anschlussende 2a (in Figur 5 nicht gezeigt) kann das Fluidleitungselement 1 beispielsweise gemäß Figur 3 oder Figur 4 ausgebildet sein.

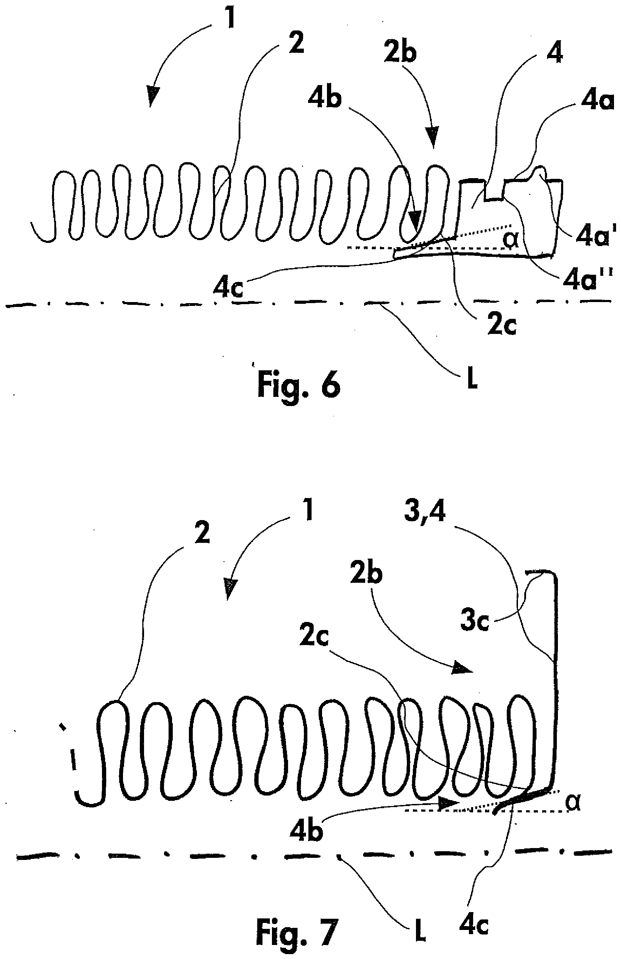

Figur 6 zeigt eine Abwandlung der Ausgestaltung in Figur 5, wobei gemäß Figur 6 die Außenkontur des Anschlussteils 4a nicht glattzylindrisch ausgebildet ist, sondern eine abweichende Strukturgebung in Form von (über den Umfang umlaufenden) Vorsprüngen 4a' und Ausnehmungen 4a" aufweist, welche dazu vorgesehen sein können, mit komplementären Strukturen nach einem weiteren Element einer Fluidleitung (nicht gezeigt) zu Verbindungszwecken zusammenzuwirken.

Figur 7 zeigt eine Ausgestaltung am Anschlussende 2b eines erfindungsgemäßen Fluidleitungselements 1, bei der eine Kombination aus Flanschverbindungsteil 3 und Anschlussteil 4 zum Einsatz kommt. Dabei ist das kombinierte Flanschverbindungs-/Anschlussteil 3, 4 grundsätzlich nach Art des Flanschverbindungsteils 3 gemäß Figur 4 ausgebildet. Allerdings weist das kombinierte Flanschverbindung-/Anschlussteil 3, 4 zusätzlich ein sich konusförmig verjüngendes Einführende 4b auf, dessen Formgebung grundsätzlich der Abschrägung 4c gemäß Figur 5 oder Figur 6 entspricht. Auch die Wirkung beim Einführen in den Ringwellschlauch 2 (Einziehen des Bords 2c nach innen) entspricht derjenigen Wirkung, wie sie vorstehend anhand der Figuren 5 und 6 beschrieben wurde.

Wie der Fachmann erkennt, können die Ausgestaltungen gemäß den Figuren 3 bis 7 grundsätzlich an jedem der Anschlussenden 2a, 2b des Ringwellschlauchs 2 Verwendung finden. Insbesondere ist auch die identische Ausgestaltung beider Anschlussenden 2a, 2b als Anschlussteil (Anschlussdrehteil) 4 durch die vorliegende Erfindung mitumfasst.

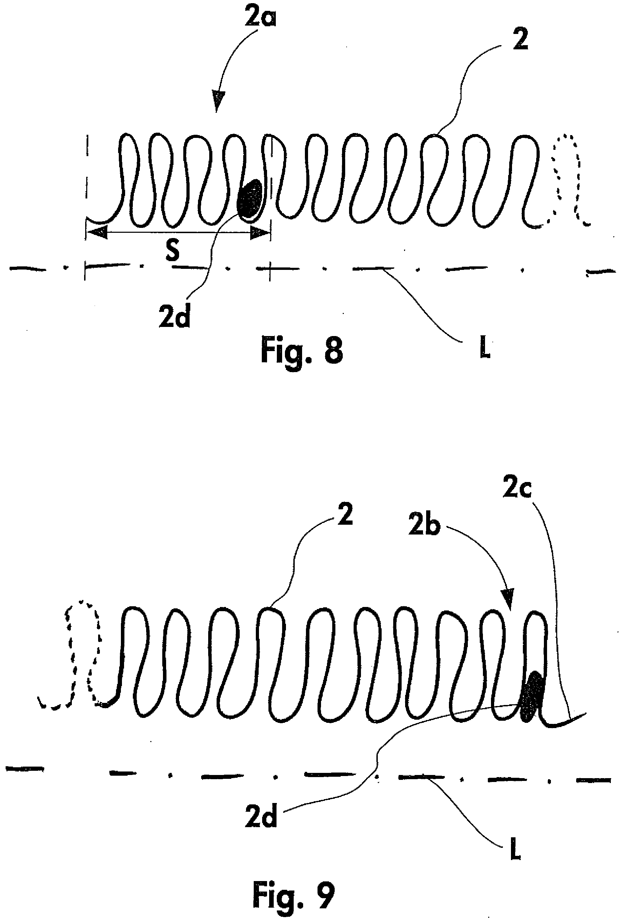

Bislang war unter Berücksichtigung der Figuren 3 bis 7 nur noch von einer kraftschlüssigen Verbindung von Flanschverbindungsteil 3 bzw. Anschlussteil (Anschlussdrehteil) 4 und Ringwellschlauch 2 die Rede. Es ist jedoch vorgesehen, dass zusätzlich noch eine stoffschlüssige Verbindung in Form einer Lötverbindung zwischen den genannten Elementen vorhanden ist bzw. geschaffen wird. Die nachfolgenden Figuren 8 und 9 dienen zur Erläuterung dieses Sachverhalts.

Figur 8 und Figur 9 zeigen jeweils einen abgelängten Ringwellschlauch 2 zur Herstellung beispielsweise eines erfindungsgemäßen Fluidleitungselements 1 gemäß Figur 1. Figur 8 zeigt den Ringwellschlauch 2 im Bereich des ersten Anschlussendes 2a, während Figur 9 den Ringwellschlauch 2 im Bereich seines zweiten Anschlussendes 2b zeigt. Allerdings müssen die Ausgestaltungen gemäß Figur 8 und Figur 9 nicht bei ein und demselben Ringwellschlauch 2 verwirklicht sein.

Bei Bezugszeichen 2d wurde in ein Wellental des Ringwellschlauchs 2 von außen ein Lotmittel eingebracht, vorzugsweise ein in Umfangsrichtung durchgängiger Lotpastenstrang. Gemäß Figur 8 befindet sich das Lotmittel im vierten Wellental gerechnet vom freien Ende des Ringwellschlauchs 2 an dessen Anschlussende 2a. Weiterhin ist das Lotmittel 2d gemäß der Ausgestaltung in Figur 8 ganz am Grund des genannten Wellentals angeordnet.

Figur 9 zeigt einen vergleichbaren Sachverhalt für das andere Anschlussende 2b des Ringwellschlauchs 2. Hier befindet sich das Lotmittel - wie gezeigt - auf der Innenseite des Ringwellschlauchs 2 zwischen den beiden Flanken eines Wellenbergs, angrenzend an den lichten Innendurchmesser des Ringwellschlauchs 2. Bei dem genannten Wellenberg handelt es sich um den endständigen Wellenberg des Ringwellschlauchs 2 im Bereich des Anschlussendes 2b, benachbart dem Bord 2c, wie in Figur 9 gezeigt.

Zur Schaffung eines erfindungsgemäßen Fluidleitungselements 1, beispielsweise gemäß Figur 1 oder Figur 3 bis 7, erfolgt nun nach Aufbringen des Lotmittels 2d gemäß Figur 8 die Stauchung des Ringwellschlauchs im Bereich des Übermaßes S gemäß Figur 2 bzw. Figur 3. Dadurch verengt sich das Wellental, welches das Lotmittel 2d enthält, so dass das Lotmittel 2d teilweise nach oben aus dem Ringwellschlauch 2 herausgedrückt wird und für eine sichere stoffschlüssige Verbindung V gemäß Figur 3 zwischen Ringwellschlauch 2 und Flanschverbindungsteil 3 sorgt. Dabei ist es durchaus erwünscht, dass das Lotmittel 2d bei Bezugszeichen V (Figur 3) zwischen Ringwellschlauch 2 und Flanschverbindungsteil 3 sichtbar nach außen hervortritt, um die Qualität der Lötverbindung zwischen Flanschverbindungsteil 3 und Ringwellschlauch 2 visuell inspizieren zu können.

Wie der Fachmann erkennt, muss es sich bei dem Lotmittei 2d keinesfalls zwingend um eine Lotpaste handeln. Vielmehr kommen auch andere Arten von Lotmittel in Betracht, insbesondere eingelegte Lotringe oder dergleichen. Die zum Schaffen der Lötverbindung V erforderliche Erwärmung kann induktiv oder durch thermische Einwirkung von außen erfolgen, insbesondere in einem Durchlaufofen (nicht gezeigt), was dem Fachmann selbstverständlich bekannt ist.

Figur 9 zeigt wie bereits erwähnt die Positionierung des Lotmittels 2d im Bereich des anderen Anschlussendes 2b, wenn eine Verbindung mit einem Anschlusssteil (Anschlussdrehteil) 4 oder einem kombinierten Fianschverbindungs-/Anschlussteil 3, 4 gemäß einer der Figuren 5 bis 7 erfolgt. Das Umlegen des Bordes 2c nach innen beim Fügen des Anschlussteils 4 mit seiner Abschrägung 4c sorgt in diesem Fall dafür, dass das Lotmittel 2d nach innen aus der Wellung des Ringwellschlauchs 2 zumindest teilweise hervortritt und so eine Kehle zwischen dem Einführende 4b des Anschlussteils 4 und dem Ringwellschlauch verschließt. Die genannte Kehle findet sich etwa bei Bezugszeichen 4b gemäß den Figuren 5 bis 7, ist jedoch aus Gründen der Übersichtlichkeit nicht weiter explizit bezeichnet.

## Patentansprüche

1. Fluidleitungselement (1), umfassend einen metallischen Ringwellschlauch (2) und ein Verbindungsteil (3, 4) zum Verbinden mit weiteren Elementen einer Fluidleitung, an welchem Ringwellschlauch (2) ein erstes und ein zweites Anschlussende (2b) ausgebildet ist, an welchen Anschlussenden (2a, 2b) jeweils ein Verbindungsteil (3, 4) zum Verbinden mit weiteren Elementen einer Fluidleitung angeordnet ist, wobei wenigstens eines der Verbindungsteile als Anschlussteil (4), vorzugsweise Anschlussdrehteil, ausgebildet ist, welches Anschlussteil (4) mit einem Einführende (4b) in den Ringwellschlauch (2) an dem betreffenden Anschlussende (2b) eingeführt ist, wobei das Anschlussteil (4) an dem Einführende (4b) eine zu seinem freien Ende hin konusförmig abgeschrägte Verjüngung (4c) aufweist,
**dadurch gekennzeichnet, dass**
in eine Innenwelle des Ringwellschlauchs (2) im Einführbereich des Anschlussteils (4) ein Lotmittel (2d), vorzugsweise Lotpaste oder Lotring, eingebracht ist, und wobei der Ringwellschlauch (2) und das Anschlussteil (4) mittels einer Lötverbindung (V) stoffschlüssig verbunden sind, vorzugsweise umfänglich durchgehend.

2. Fluidleitungselement (1) nach Anspruch 1, **dadurch gekennzeichnet, dass** das andere der beiden Verbindungsteile (3) als Flanschverbindungsteil (3) ausgebildet ist, welches Flanschverbindungsteil (3) den Ringwellschlauch (2) an dem betreffenden Anschlussende (2a) umfänglich umgibt und welches durch Stauchen des Ringwellschlauchs (2) im Bereich des betreffenden Anschlussendes (2a) auf dem Ringwellschlauch (2) gehalten ist, wobei in eine Außenwelle des Ringwellschlauchs (2) in dem von dem Flanschverbindungsteil (3) umgebenen Bereich ein Lotmittel (2d), nur vorzugsweise Lotpaste oder Lotring, eingebracht ist, und der Ringwellschlauch (2) und das Flanschverbindungsteil (3) mittels einer Lötverbindung (V) stoffschlüssig verbunden sind, vorzugsweise umfänglich durchgehend.

3. Fluidleitungselement nach Anspruch 2,
**dadurch gekennzeichnet,**
**dass** das Lotmittel (2d) durch das Stauchen des Ringwellschlauchs (2) zwischen Ringwellschlauch (2) und Flanschverbindungsteil (3) nach außen hervorgetreten und von außen sichtbar ist.

4. Fluidleitungselement (1) nach mindestens einem der Ansprüche 1 bis 3,
**dadurch gekennzeichnet,**
**dass** das Anschlussteil (4) im Bereich der konusförmigen Verjüngung eine Abschrägung (4c) gegenüber einer Längsachse (2) der Anordnung aufweist, die etwa 1 bis 10°, vorzugsweise etwa 2 bis 5° und höchst vorzugsweise etwa 3° beträgt.

5. Fluidleitungselement (1) nach mindestens einem der Ansprüche 1 bis 4,
**dadurch gekennzeichnet,**
**dass** durch die eingeführte konusförmige Verjüngung (4c) ein Ende (2c) des Ringwellschlauchs (2) an dem betreffenden Anschlussende (2b) nach innen in den lichten Durchmesser des Ringwellschlauchs (2) eingezogen ist.

6. Fluidleitungselement (1) nach mindestens einem der Ansprüche 1 bis 5,
**dadurch gekennzeichnet,**
**dass** die Lötverbindung (V) induktiv oder durch thermische Einwirkung geschaffen ist, vorzugsweise in einem Durchlaufofen.

7. Fluidleitungselement (1) nach Anspruch 2 oder einem der Ansprüche 3 bis 6 bei Rückbezug auf Anspruch 2,
**dadurch gekennzeichnet,**
**dass** das Flanschverbindungsteil (3) als massives Stanzteil ausgebildet ist.

8. Fluidleitungselement (1) nach Anspruch 2 oder einem der Ansprüche 3 bis 6 bei Rückbezug auf Anspruch 2,
**dadurch gekennzeichnet,**
**dass** das Flanschverbindungsteil (3) als Blechteil ausgebildet ist.

9. Fluidleitungselement (1) nach mindestens einem der Ansprüche 1 bis 8,
**dadurch gekennzeichnet,**
**dass** das Anschlussteil (4) an seinem dem Einführende (4b) entgegengesetzten Ende als Flanschverbindungsteil (3) ausgebildet ist, vorzugsweise als Blechflanschteil.

10. Fluidleitungselement (1) nach mindestens einem der Ansprüche 1 bis 9,
**dadurch gekennzeichnet,**
**dass** das Anschlussteil (4) an seinem dem Einführende (4b) entgegengesetzten Ende eine Außenkontur (4a, 4a', 4a") zum Verbinden mit einem weiteren Element der Fluidleitung aufweist.

11. Verfahren zum Herstellen eines Fluidleitungselements (1), umfassend einen metallischen Ringwellschlauch (2), an welchem Ringwellschlauch (2) ein erstes Anschlussende (2a) und ein zweites Anschlussende (2b) ausgebildet ist, an welchen Anschlussenden (2a, 2b) jeweils ein Verbindungsteil (3, 4) zum Verbinden mit weiteren Elementen einer Fluidleitung angeordnet ist, welches Verfahren nach einem Ablängen des Ringwellschlauchs (2) die folgenden Schritte beinhaltet:
Einführen eines sich an seinem einen Ende konisch verjüngenden Anschlussteils (4) in den Ringwellschlauch (2), bis das Anschlussteil (4) mit seinem Außendurchmesser im Bereich des Einführendes innen an dem Ringwellschlauch (2) kraftschlüssig in Anlage tritt, **dadurch gekennzeichnet, dass** zuvor in eine Innenwelle des Ringwellschlauchs (2) im Einführbereich (4b) des Anschlussteils (4) ein Lotmittel (2d) eingebracht wird, vorzugsweise Lotpaste oder Lotring, und durch induktive und/oder thermische Einwirkung eine Lötverbindung (V) zwischen Ringwellschlauch (2) und dem Anschlussteil (4) geschaffen wird.

12. Verfahren nach Anspruch 11, **dadurch gekennzeichnet, dass** das Verfahren zusätzlich folgende Schritte beinhaltet:
Durchführen eines Endes (2a) des Ringwellschlauchs (2) durch ein als Flanschverbindungsteil (3) ausgebildetes Verbindungsteil (3), so dass dieses Flanschverbindungsteil (3) den Ringwellschlauch (2) umfänglich umgibt, und anschließendes Stauchen des Ringwellschlauchs (2) im Bereich des betreffenden Endes (2a), um den Ringwellschlauch (2) und das Flanschverbindungsteil (3) gegeneinander zu verstemmen, wobei zuvor in einer Außenwelle des Ringwellschlauchs (2) in dem von dem Flanschverbindungsteil (3) zu umgebenden Bereich ein Lotmittel (2d), vorzugsweise Lotpaste oder Lotring, eingebracht wird, und durch induktive und/oder thermische Einwirkung eine Lötverbindung (V) zwischen Ringwellschlauch (2) und Flanschverbindungsteil (3) geschaffen wird.

13. Verfahren nach Anspruch 12,
**dadurch gekennzeichnet,**
**dass** das Stauchen und/oder das Aufbringen des Lotmittels (2d) derart erfolgt, dass beim Stauchen des Ringwellschlauchs (2) das Lotmittel (2d) zwischen Flanschverbindungsteil (3) und Ringwellschlauch (2) nach außen hervortritt.

14. Verfahren nach mindestens einem der Ansprüche 11 bis 13,
**dadurch gekennzeichnet,**
**dass** der Ringwellschlauch (2) derart abgelängt wird und/oder dass das Anschlussteil (4) derart in den Ringwellschlauch (2) eingeführt wird, dass der Bord (2c) des Ringwellschlauchs (2) nach innen mit eingezogen wird.

## Claims

1. Fluid conduit element (1), comprising a metallic annularly corrugated hose (2) and a connecting component (3, 4) for connection to further elements of a fluid conduit, on which annularly corrugated hose (2) there is formed a first and a second connection end (2b), on each of which connection ends (2a, 2b) there is arranged a connecting component (3, 4) for connection to further elements of a fluid conduit, at least one of the connecting components being in the form of a connection part (4), preferably a rotary connection part, which connection part (4) has been inserted by an insertion end (4b) into the annularly corrugated hose (2) at the relevant connection end (2b), the connection part (4) having at the insertion end (4b) a tapered portion (4c) which slopes conically towards its free end,
**characterised in that**
a soldering agent (2d), preferably a solder paste or solder ring, has been introduced into an inner corrugation of the annularly corrugated hose (2) in the insertion region of the connection part (4), and the annularly corrugated hose (2) and the connection part (4) have been material-bonded by means of a soldered connection (V), preferably continuously around the circumference.

2. Fluid conduit element (1) according to claim 1, **characterised in that** the other of the two connecting components (3) is in the form of a flange connector (3), which flange connector (3) surrounds the annularly corrugated hose (2) around the circumference at the relevant connection end (2a) and is held on the annularly corrugated hose (2) by compression of the annularly corrugated hose (2) in the region of the relevant connection end (2a), wherein a soldering agent (2d), only preferably a solder paste or solder ring, has been introduced into an outer corrugation of the annularly corrugated hose (2) in the region surrounded by the flange connector (3), and the annularly corrugated hose (2) and the flange connector (3) have been material-bonded by means of a soldered connection (V), preferably continuously around the circumference.

3. Fluid conduit element according to claim 2,
**characterised in that**
as a result of the compression of the annularly corrugated hose (2) the soldering agent (2d) protrudes outwards between the annularly corrugated hose (2) and the flange connector (3) and is visible from the outside.

4. Fluid conduit element (1) according to at least one of claims 1 to 3,
**characterised in that**
the connection part (4), in the region of the conically tapered portion, has a slope (4c) with respect to a longitudinal axis (2) of the arrangement that is approximately from 1 to 10°, preferably approximately from 2 to 5° and most preferably approximately 3°.

5. Fluid conduit element (1) according to at least one of claims 1 to 4,
**characterised in that**
as a result of the inserted conically tapered portion (4c), one end (2c) of the annularly corrugated hose (2) at the relevant connection end (2b) has been drawn inwards into the inside diameter of the annularly corrugated hose (2).

6. Fluid conduit element (1) according to at least one of claims 1 to 5,
**characterised in that**
the soldered connection (V) has been created by induction or by action of heat, preferably in a continuous furnace.

7. Fluid conduit element (1) according to claim 2 or any one of claims 3 to 6 when appended to claim 2,
**characterised in that**
the flange connector (3) is in the form of a solid stamped component.

8. Fluid conduit element (1) according to claim 2 or any one of claims 3 to 6 when appended to claim 2,
**characterised in that**
the flange connector (3) is in the form of a sheet metal component.

9. Fluid conduit element (1) according to at least one of claims 1 to 8,
**characterised in that**
the connection part (4), at its end opposite the insertion end (4b), is in the form of a flange connector (3), preferably a sheet metal flange component.

10. Fluid conduit element (1) according to at least one of claims 1 to 9,
**characterised in that**
the connection part (4), at its end opposite the insertion end (4b), has an outer contour (4a, 4a', 4a") for connection to a further element of the fluid conduit.

11. Method of producing a fluid conduit element (1), comprising a metallic annularly corrugated hose (2), on which annularly corrugated hose (2) there is formed a first connection end (2a) and a second connection end (2b), on each of which connection ends (2a, 2b) there is arranged a connecting component (3, 4) for connection to further elements of a fluid conduit, which method, once the annularly corrugated hose (2) has been cut to length, includes the following steps:
insertion of a connection part (4), which tapers conically at one end, into the annularly corrugated hose (2) until the connection part (4) comes to rest with its outer diameter in the region of the insertion end in force-based engagement against the inside of the annularly corrugated hose (2),
**characterised in that**
beforehand a soldering agent (2d), preferably a solder paste or solder ring, is introduced into an inner corrugation of the annularly corrugated hose (2) in the insertion region (4b) of the connection part (4), and a soldered connection (V) is created between the annularly corrugated hose (2) and the connection part (4) by induction and/or by action of heat.

12. Method according to claim 11, **characterised in that** the method additionally includes the following steps:
passing one end (2a) of the annularly corrugated hose (2) through a connecting component (3), which is in the form of a flange connector (3), so that the flange connector (3) surrounds the annularly corrugated hose (2) around the circumference, and subsequently compressing the annularly corrugated hose (2) in the region of the relevant end (2a) in order to lock the annularly corrugated hose (2) and the flange connector (3) against one another, wherein beforehand a soldering agent (2d), preferably a solder paste or solder ring, is introduced into an outer corrugation of the annularly corrugated hose (2) in the region to be surrounded by the flange connector (3), and a soldered connection (V) is created between the annularly corrugated hose (2) and the flange connector (3) by induction and/or by action of heat.

13. Method according to claim 12,
**characterised in that**
the compression and/or the application of the soldering agent (2d) is effected in such a way that on compression of the annularly corrugated hose (2) the soldering agent (2d) protrudes outwards between the flange connector (3) and the annularly corrugated hose (2).

14. Method according to at least one of claims 11 to 13,
**characterised in that**
the annularly corrugated hose (2) is cut to length in such a way and/or the connection part (4) is inserted into the annularly corrugated hose (2) in such a way that the rim (2c) of the annularly corrugated hose (2) is drawn inwards therewith.

## Revendications

1. Elément (1) de conduite de fluide, comprenant un tuyau souple métallique (2) à ondulations annulaires et une pièce de liaison (3, 4) pour le relier à d'autres éléments d'une conduite de fluide, tuyau souple (2) à ondulations annulaires sur lequel sont formées une première et une deuxième extrémité de raccordement (2b), une pièce de liaison respective (3, 4) étant disposée à chacune des extrémités de raccordement (2a, 2b) pour la liaison à d'autres éléments d'une conduite de fluide, sachant qu'au moins une des pièces de liaison est réalisée sous la forme d'une pièce de raccordement (4), de préférence une pièce de raccordement usinée au tour, laquelle pièce de raccordement (4) est introduite par une extrémité d'introduction (4b) dans le tuyau souple (2) à ondulations annulaires à l'extrémité de raccordement en question (2b), sachant que la pièce de raccordement (4) présente à l'extrémité d'introduction (4b) un rétrécissement (4c) biseauté en forme de cône en direction de son extrémité libre, **caractérisé en ce qu'**un moyen de brasage (2d), de préférence une pâte à braser ou un anneau de brasage, est introduit dans une ondulation intérieure du tuyau souple (2) à ondulations annulaires dans la région d'introduction de la pièce de raccordement (4), et sachant que le tuyau souple (2) à ondulations annulaires et la pièce de raccordement (4) sont assemblés par liaison de matière au moyen d'une liaison brasée (V), de préférence continûment sur la périphérie.

2. Elément (1) de conduite de fluide selon la revendication 1, **caractérisé en ce que** l'autre des pièces de liaison (3) est réalisée sous la forme d'une pièce (3) de liaison à bride, laquelle pièce (3) de liaison à bride entoure périphériquement le tuyau souple (2) à ondulations annulaires à l'extrémité de raccordement en question (2a) et laquelle est maintenue sur le tuyau souple (2) à ondulations annulaires par compression du tuyau souple (2) à ondulations annulaires dans la région de l'extrémité de raccordement en question (2a), sachant qu'un moyen de brasage (2d), uniquement de préférence une pâte à braser ou un anneau de brasage, est introduit dans une ondulation extérieure du tuyau souple (2) à ondulations annulaires dans la région entourée par la pièce (3) de liaison à bride, et que le tuyau souple (2) à ondulations annulaires et la pièce (3) de liaison à bride sont assemblés par liaison de matière au moyen d'une liaison brasée (V), de préférence continûment sur la périphérie.

3. Elément de conduite de fluide selon la revendication 2, **caractérisé en ce que** le moyen de brasage (2d), par la compression du tuyau souple (2) à ondulations annulaires, est ressorti vers l'extérieur entre le tuyau souple (2) à ondulations annulaires et la pièce (3) de liaison à bride et est visible de l'extérieur.

4. Elément (1) de conduite de fluide selon au moins une des revendications 1 à 3, **caractérisé en ce que** la pièce de raccordement (4) présente dans la région du rétrécissement conique un biais par rapport à un axe longitudinal (2) de l'agencement qui est égal à environ 1 à 10°, de préférence environ 2 à 5° et d'une manière particulièrement préférée environ 3°.

5. Elément (1) de conduite de fluide selon au moins une des revendications 1 à 4, **caractérisé en ce que**, par le rétrécissement conique introduit (4c), une extrémité (2c) du tuyau souple (2) à ondulations annulaires à l'extrémité de raccordement en question (2b) est rentrée vers l'intérieur dans le diamètre intérieur du tuyau souple (2) à ondulations annulaires.

6. Elément (1) de conduite de fluide selon au moins une des revendications 1 à 5, **caractérisé en ce que** la liaison brasée (V) est réalisée par induction ou par action thermique, de préférence dans un four continu.

7. Elément (1) de conduite de fluide selon la revendication 2 ou selon l'une des revendications 3 à 6 en rattachement à la revendication 2, **caractérisé en ce que** la pièce (3) de liaison à bride est réalisée sous la forme d'une pièce découpée massive.

8. Elément (1) de conduite de fluide selon la revendication 2 ou selon l'une des revendications 3 à 6 en rattachement à la revendication 2, **caractérisé en ce que** la pièce (3) de liaison à bride est réalisée sous la forme d'une pièce de tôle.

9. Elément (1) de conduite de fluide selon au moins une des revendications 1 à 8, **caractérisé en ce que** la pièce de raccordement (4) est, à son extrémité opposée à l'extrémité d'introduction (4b), réalisée sous la forme d'une pièce (3) de liaison à bride, de préférence sous la forme d'une pièce à bride en tôle.

10. Elément (1) de conduite de fluide selon au moins une des revendications 1 à 9, **caractérisé en ce que** la pièce de raccordement (4) présente, à son extrémité opposée à l'extrémité d'introduction (4b), un contour extérieur (4a, 4a', 4a") pour la liaison avec un autre élément de la conduite de fluide.

11. Procédé de fabrication d'un élément (1) de conduite de fluide comprenant un tuyau souple métallique (2) à ondulations annulaires, tuyau souple (2) à ondulations annulaires sur lequel sont formées une première extrémité de raccordement (2a) et une deuxième extrémité de raccordement (2b), une pièce de liaison respective (3, 4) étant disposée à chacune des extrémités de raccordement (2a, 2b) pour la liaison à d'autres éléments d'une conduite de fluide, lequel procédé comprend, après une mise à longueur du tuyau souple (2) à ondulations annulaires, les étapes suivantes :
introduction dans le tuyau souple (2) à ondulations annulaires d'une pièce de raccordement (4) se rétrécissant en forme de cône à l'une de ses extrémités, jusqu'à ce que la pièce de raccordement (4), par son diamètre extérieur, entre en application à force contre le tuyau souple (2) à ondulations annulaires, intérieurement dans la région de l'extrémité d'introduction,
**caractérisé en ce qu'**on introduit au préalable un moyen de brasage (2d), de préférence une pâte à braser ou un anneau de brasage, dans une ondulation intérieure du tuyau souple (2) à ondulations annulaires dans la région d'introduction (4b) de la pièce de raccordement (4), et on réalise par action inductive et/ou thermique une liaison brasée (V) entre le tuyau souple (2) à ondulations annulaires et la pièce de raccordement (4).

12. Procédé selon la revendication 11, **caractérisé en ce que** le procédé comprend en outre les étapes suivantes :
passage d'une extrémité (2a) du tuyau souple (2) à ondulations annulaires à travers une pièce de liaison (3) réalisée sous la forme d'une pièce (3) de liaison à bride, de sorte que cette pièce (3) de liaison à bride entoure périphériquement le tuyau souple (2) à ondulations annulaires, puis compression du tuyau souple (2) à ondulations annulaires dans la région de l'extrémité en question (2a), afin de mater le tuyau souple (2) à ondulations annulaires et la pièce (3) de liaison à bride l'un contre l'autre, sachant qu'on introduit au préalable un moyen de brasage (2d), de préférence une pâte à braser ou un anneau de brasage, dans une ondulation extérieure du tuyau souple (2) à ondulations annulaires dans la région à entourer par la pièce (3) de liaison à bride, et qu'on réalise par action inductive et/ou thermique une liaison brasée (V) entre le tuyau souple (2) à ondulations annulaires et la pièce (3) de liaison à bride.

13. Procédé selon la revendication 12, **caractérisé en ce que** la compression et/ou l'application du moyen de brasage (2d) s'effectuent de telle sorte que, lors de la compression du tuyau souple (2) à ondulations annulaires, le moyen de brasage (2d) ressort vers l'extérieur entre la pièce (3) de liaison à bride et le tuyau souple (2) à ondulations annulaires.

14. Procédé selon au moins une des revendications 11 à 13, **caractérisé en ce que** le tuyau souple (2) à ondulations annulaires est mis à longueur de telle sorte, et/ou **en ce que** la pièce de raccordement (4) est introduite dans le tuyau souple (2) à ondulations annulaires de telle sorte, que le rebord (2c) du tuyau souple (2) à ondulations annulaires est conjointement rentré vers l'intérieur.
